# EUROPEAN PATENT SPECIFICATION

(11) **EP 1 476 487 B1**
(45) Date of publication and mention of the grant of the patent: **02.12.2009**
(21) Application number: 03705513.4
(22) Date of filing: 17.02.2003
(51) Int. Cl.: C08G 18/67, C08G 18/48, C09D 175/16, C03C 25/10

(54) **CURABLE LIQUID RESIN COMPOSITION**
HÄRTBARE FLÜSSIGE HARZZUSAMMENSETZUNG
COMPOSITION DE RESINE LIQUIDE DURCISSABLE

(30) Priority: 19.02.2002 JP 2002040877
(43) Date of publication of application: 17.11.2004
(73) Proprietor: DSM IP Assets B.V., 6411 TE Heerlen (NL); JSR Corporation, Tokyo 104-8410 (JP)
(72) Inventor: SUGIMOTO, Masanobu, Toky o104-8410 (JP); SUGIMOTO, Hideki, Tokyo 104-8410 (JP); KOMIYA, Zen, Tokyo 104-8410 (JP); UKACHI, Takashi, Tokyo 104-8410 (JP)
(74) Representative: van Loon, C.J.J.
(86) International application number: PCT/NL2003/000118
(87) International publication number: WO 2003/070802

(56) References cited:
- EP-A- 1 070 682
- WO-A-00/75211
- WO-A-93/21248

## Description

### Detailed Description of the Invention

### Field of the Invention

The present invention relates to a curable liquid resin composition. More particularly, the present invention relates to a curable liquid resin composition suitable as a primary coating material, a secondary coating material, and, in particular, as a ribbon matrix material for optical fibers.

### Prior Art and Problems to be Solved by the Invention

In the fabrication of optical fibers, a resin coating is applied for protection and reinforcement immediately after spinning molten glass fibers. As the resin coating, a structure in which a flexible primary coating layer is provided on the surface of the optical fiber and a rigid secondary coating layer is provided over the primary coating layer has been known. For practical application, four or eight optical fibers are arranged side by side in a plane and secured using a bundling material to obtain a ribbon structure with a rectangular cross section. A resin composition for forming the primary coating layer is called a primary material, a resin composition for forming the secondary coating layer is called a secondary material, and a material for binding several optical fibers is called a ribbon matrix material.

One of the functions of the secondary material and the ribbon matrix material is their capability of exhibiting high rigidity to prevent external load from being applied to the primary material in the lower layer and quartz fiber. As a conventional material, a urethane (meth)acrylate obtained by using polytetramethylene glycol as a component has been used. Such a linear diol is expected to increase elasticity and elongation because the molecules are comparatively easily arranged for deformation. However, the resulting resin composition sometimes coagulates during storage at a low temperature, giving rise to difficulty in handling. One method of improving handling properties of the resin composition is to use a urethane (meth)acrylate obtained by using a diol originating from polypropylene glycol. However, this method has a problem of decreasing elasticity at a high temperature, particularly sacrificing flexibility as the ribbon matrix material, if the resin composition is designed to produce a cured product having high elongation.

A decrease in elongation is considered to cause the ribbon matrix material to remain on an optical fiber when removing the ribbon matrix material layer from the optical fiber ribbon. Therefore, a ribbon matrix material having good elongation has been demanded to eliminate the problem relating to the residual ribbon matrix material.

Accordingly, an object of the present invention is to provide a curable liquid resin composition which produces a cured product having high elasticity and high elongation suitable as a primary coating material, a secondary coating material, and, in particular, as a ribbon matrix material for optical fibers.

### Means for Solving the Problems

The present inventors have found that a curable liquid resin composition which can be easily handled at a low temperature and produces a cured product free from a decrease in elasticity and elongation at a high temperature can be obtained by using a urethane (meth)acrylate obtained by using as polyol components (i) a polyether polyol comprising a structure according to formula (1), (ii) a polyether polyol having a cyclic structure and optionally (iii) one or more other polyols. This finding has led to the completion of the present invention.

-CH₂CH(CH₃)O- (1)

Specifically, the present invention provides a curable liquid resin composition comprising a urethane (meth)acrylate obtained by using as polyol components (i) a polyether polyol comprising a structure according to formula (1), (ii) a polyether polyol having a cyclic structure, and optionally (iii) one or more other polyols.

### Preferred Embodiment of the Invention

The urethane (meth)acrylate used in the present invention is produced by reacting (A) at least one diisocyanate, (B) at least one hydroxyl group-containing (meth)acrylate, and (C) polyol components comprising: (i) a polyether polyol comprising a structure according to formula (1), (ii) a polyether polyol having a cyclic structure and optionally (iii) one or more other polyols.

Specifically, the urethane (meth)acrylate is produced by reacting isocyanate groups of at least one diisocyanate with hydroxyl groups of the polyol components and at least one hydroxyl group-containing (meth)acrylate.

The following examples of suitable reaction methods can be given: a method of reacting the polyol components, at least one diisocyanate, and at least one hydroxyl group-containing (meth)acrylate all together; a method of reacting the polyol components with at least one diisocyanate, and then reacting the resulting product with at least one hydroxyl group-containing (meth)acrylate; a method of reacting at least one diisocyanate with at least one hydroxyl group-containing (meth)acrylate, and then reacting the resulting product with the polyol components; and a method of reacting at least one diisocyanate with at least one hydroxyl group-containing (meth)acrylate, reacting the resulting product with the polyol components, and further reacting the resulting product with at least one hydroxyl group-containing (meth)acrylate.

The amounts of the polyol componets, the diisocyanate(s), and the hydroxyl group-containing (meth)acrylate(s) are preferably chosen such that isocyanate groups included in the diisocyanate(s) and hydroxyl groups included in the hydroxyl group-containing (meth)acrylate(s) are respectively 1.1-3 equivalents and 0.2-1.5 equivalents for one equivalent of hydroxyl groups included in the polyol components.

In the reaction of these compounds, it is preferable to use a urethanization catalyst such as copper naphthenate, cobalt naphthenate, zinc naphthenate, di-n-butyltin dilaurate, triethylamine, 1,4-diazabicyclo[2.2.2]octane, or 2,6,7-trimethyl-1,4-diazabicyclo[2.2.2]octane in an amount of from 0.01 to 1 parts by weight for 100 parts by weight of the total reactant. The reaction is carried out at a temperature of preferably 10-90°C, and particularly preferably 30-80°C.

As examples of a diisocyanate (A), 2,4-tolylene diisocyanate, 2,6-tolylene diisocyanate, 1 ,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexylisocyanate), 2,2,4-trimethylhexamethylene diisocyanate, bis(2-isocyanate ethyl)fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethylxylylene diisocyanate, 2,5-(or 6-)bis(isocyanatemethyl)-bicyclo[2.2.1]heptane, and the like can be given. Of these, 2,4-tolylene diisocyanate, isophorone diisocyanate, xylylene diisocyanate, and methylenebis(4-cyclohexylisocyanate) are preferable.

These diisocyanates may be used either individually or in combination of two or more.

Examples of the hydroxyl group-containing (meth)acrylate(s) (B) include 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butanediol mono(meth)acrylate, 2-hydroxyalkyl(meth)acryloyl phosphate, 4-hydroxycyclohexyl (meth)acrylate, 1,6-hexanediol mono(meth)acrylate, neopentyl glycol mono(meth)acrylate, trimethylolpropane di(meth)acrylate, trimethylolethane di(meth)acrylate, pentaerythritol tri(meth)acrylate, dipentaerythritol penta(meth)acrylate, and (meth)acrylates of the following formulas (2) and (3):

CH₂ = CR¹- COOCH₂CH₂- (OCOCH₂CH₂CH₂CH₂CH₂)ₙ - OH (2)

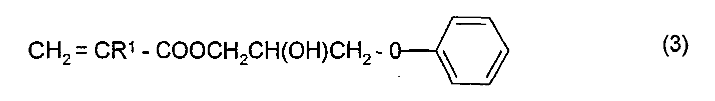

wherein R¹ represents a hydrogen atom or a methyl group and n is an integer of 1-15. Compounds obtained by the addition reaction of (meth)acrylic acid and a glycidyl group-containing compound such as alkyl glycidyl ether, allyl glycidyl ether, and glycidyl (meth)acrylate may also be used. Of these hydroxyl group-containing (meth)acrylates, 2-hydroxyethyl (meth)acrylate and 2-hydroxypropyl (meth)acrylate are particularly preferable.

These hydroxyl group-containing (meth)acrylate compounds may be used either individually or in combination of two or more.

The polyol components used as the component (C) in the present invention include at least (C1) a polyether polyol comprising a structural unit shown by formula (1) and (C2) a polyether polyol having a cyclic structure. A liquid curable resin composition which produces a cured product of which the Young's modulus is not decreased and exhibits good elongation at a high temperature can be obtained by using these two types of polyols in combination. If necessary, one or more other polyols (C3) may be used.

As an example of the polyether polyol comprising a structure shown by formula (1) used as the component (C1), polypropylene glycol can be given, preferably having a number average molecular weight of 300-5,000 g/mol, and particularly preferably 400-3,000 g/mol. The polypropylene glycol is commercially available as PPG 400, 1000, 2000, 3000, EXCENOL 720, 1020, 2020 (manufactured by Asahi Glass Urethane Co., Ltd.), and the like. The component (C1) may be used either individually or in combination of two or more.

As examples of the polyether polyol having a cyclic structure used as the component (C2), aliphatic polyether polyols, aromatic polyether polyols, and the like can be given.

As examples of aromatic polyether polyols, alkoxylated bisphenol A, alkoxylated bisphenol F, hydrogenated bisphenol A, hydrogenated bisphenol F, alkoxylated hydrogenated bisphenol A, alkoxylated hydrogenated bisphenol F, alkoxylated hydroquinone, alkoxylated naphthohydroquinone, alkylene oxide addition diol of anthrahydroquinone, and the like can be given.

As examples of cycloaliphatic polyether polyols, 1,4-cyclohexanediol, alkoxylated 1,4-cyclohexanediol, tricyclodecanediol, tricyclodecanedimethanol, pentacyclopentadecanediol, and pentacyclopentadecanedimethanol can be given.

Of these cycloaliphatic polyether polyols and aromatic polyether polyols, alkoxylated bisphenol A and tricyclodecanedimethanol are preferable. Of these polyols, an aromatic polyether polyol is preferable. An alkoxylated bisphenol A is particularly preferable. The number of mols of the alkylene oxide added to produce the alkoxylated polyol is preferably 6 mols or less per one mol of the polyol. If the number of moles of the alkylene oxide is too large, the Young's modulus of the cured product may be decreased. These polyols are commercially available as Uniol DA400, DB400 (manufactured by Nippon Oil and Fats Co., Ltd.), tricyclodecanedimethanol (manufactured by Mitsubishi Chemical Corp.), and the like. The component (C2) may be used either individually or in combination of two or more.

As examples of the polyols used as the component (C3), (C3-1) polyether polyols other than (C1) and (C2), (C3-2) polyester polyols, (C3-3) polycarbonate polyols, (C3-4) polycaprolactone polyols, and the like can be given. There are no specific limitations to the manner of polymerization of the structural units of these polyols, which may be any of random polymerization, block polymerization, or graft polymerization.

As examples of aliphatic polyols, polyethylene glycol, polytetramethylene glycol, polyhexamethylene glycol, polyheptamethylene glycol, polydecamethylene glycol, polyether diols obtained by ring-opening copolymerization of two or more ion-polymerizable cyclic compounds, and the like can be given.

As examples of ion-polymerizable cyclic compounds, cyclic ethers such as ethylene oxide, butene-1-oxide, isobutene oxide, 3,3-bischloromethyloxetane, tetrahydrofuran, 2-methyltetrahydrofuran, 3-methyltetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene monoxide, isoprene monoxide, vinyl oxetane, vinyl tetrahydrofuran, vinyl cyclohexene oxide, phenyl glycidyl ether, butyl glycidyl ether, glycidyl benzoate, and the like can be given.

Polyether diols obtained by the ring-opening copolymerization of these ion-polymerizable cyclic compounds and cyclic imines such as ethyleneimine, cyclic lactonic acids such as β-propyolactone or glycolic acid lactide, or dimethylcyclopolysiloxanes may be used. As examples of specific combinations of two or more ion-polymerizable cyclic compounds, combinations of tetrahydrofuran and propylene oxide, tetrahydrofuran and 2-methyltetrahydrofuran, tetrahydrofuran and 3-methyltetrahydrofuran, tetrahydrofuran and ethylene oxide, propylene oxide and ethylene oxide, butene-1-oxide and ethylene oxide, a ternary copolymer of tetrahydrofuran, butene-1-oxide, and ethylene oxide, and the like can be given. The ring-opening copolymer of these ion-polymerizable cyclic compounds may be either a random copolymer or a block copolymer.

The polyether polyols used as the component (C3-1) are commercially available as PTMG650, PTMG1000, PTMG2000 (manufactured by Mitsubishi Chemical Corp.), PEG1000, Unisafe DC1100, DC1800 (manufactured by Nippon Oil and Fats Co., Ltd.), PPTG2000, PPTG1000, PTG400, PTGL2000 (manufactured by Hodogaya Chemical Co., Ltd.), Z-3001-4, Z-3001-5, PBG2000A, PBG2000B (manufactured by Daiichi Kogyo Seiyaku Co., Ltd.), and the like.

As polyester polyols (C3-2), polyester,polyols obtained by reacting a polyhydric alcohol with a polybasic acid can be given. Examples of polyhydric alcohols include ethylene glycol, polyethylene glycol, propylene glycol, polypropylene glycol, tetramethylene glycol, polytetramethylene glycol, 1,6-hexanediol, neopentyl glycol, 1,4-cyclohexanedimethanol, 3-methyl-1,5-pentanediol, 1,9-nonanediol, 2-methyl-1,8-octanediol, and the like. Examples of polybasic acids include phthalic acid, isophthalic acid, terephthalic acid, maleic acid, fumaric acid, adipic acid, sebacic acid, and the like. These polyester polyols (C3-3) are commercially available as Kurapol P-2010, PMIPA, PKA-A, PKA-A2, PNA-2000 (manufactured by Kuraray Co., Ltd.), and the like.

As examples of polycarbonate polyols (C3-3), polycarbonate of polytetrahydrofuran, polycarbonate of 1,6-hexanediol, and the like can be given. As commercially available products of polycarbonate polyols, DN-980, 981, 982, 983 (manufactured by Nippon Polyurethane Industry Co., Ltd.), PC-8000 (manufactured by PPG), PC-THF-CD (manufactured by BASF), and the like can be given.

As examples of polycaprolactone polyols (C3-4), polycaprolactone diols obtained by reacting ε-caprolactone and dihydric diols such as ethylene glycol, polyethylene glycol, propylene glycol, polypropylene glycol, tetramethylene glycol, polytetramethylene glycol, 1,2-polybutylene glycol, 1,6-hexanediol, neopentyl glycol, 1,4-cyclohexanedimethanol, and 1,4-butanediol can be given. These diols are commercially available as PLACCEL 205, 205AL, 212, 212AL, 220, 220AL (manufactured by Daicel Chemical Industries, Ltd.), and the like.

Polyols other than the above-described polyols may also be used. As examples of other polyols, ethylene glycol, 1,4-butanediol, 1,5-pentanediol, 1,6-hexanediol, neopentyl glycol, 1,4-cyclohexanedimethanol, a dimethylol compound of dicyclopentadiene, tricyclodecanedimethanol, β-methyl-δ-valerolactone, hydroxy-terminated polybutadiene, hydroxy-terminated hydrogenated polybutadiene, castor oil-modified polyol, diol-terminated compound of polydimethylsiloxane, polydimethylsiloxanecarbitol-modified polyol, and the like can be given.

The polyether polyols used as the component (C3) may be used either individually or in combination of two or more.

Diamines may be used in combination with the above polyols. As examples of diamines, ethylenediamine, tetramethylenediamine, hexamethylenediamine, p-phenylenediamine, 4,4'-diaminodiphenylmethane, diamines containing a hetero atom, polyether diamine, and the like can be given.

A urethane (meth)acrylate (D) obtained by reacting 1 mol of diisocyanate with 2 mols of hydroxyl group-containing (meth)acrylate may be added to the curable liquid resin composition of the present invention. As examples of such a urethane (meth)acrylate, a reaction product of hydroxyethyl (meth)acrylate and 2,4-tolylene diisocyanate, a reaction product of hydroxyethyl (meth)acrylate and 2,5-(or 6-)bis(isocyanatemethyl)-bicyclo[2.2.1]heptane, a reaction product of hydroxyethyl (meth)acrylate and isophorone diisocyanate, a reaction product of hydroxypropyl (meth)acrylate and 2,4-tolylene diisocyanate, and a reaction product of hydroxypropyl (meth)acrylate and isophorone diisocyanate can be given.

The urethane (meth)acrylate (D) containing a diol is added to the composition in an amount of preferably 1-95 wt%, and still more preferably 5-80 wt%. Applicability can be improved by adding 1-95 wt% of the urethane (meth)acrylate (D).

The weight ratio of the components (C1) and (C2) to the component (C3) ((C1)+(C2):(C3)) is 100:0 to 10:90, and preferably 90:10 to 20:80. If the amount of the component (C3) is 90 wt% or less of the total amount of the components (C1), (C2), and (C3), the curable liquid resin composition of the present invention exhibits good storage characteristics at a low temperature.

The weight ratio of the components (C1) and (C2) ((C1):(C2)) is 90:10 to 10:90, and preferably 90:20 to 20:90. If the amount of the component (C1) is 90 wt% or less of the total amount of the components (C1) and (C2), the resulting cured product has a sufficiently high Young's modulus. If the amount of the component (C2) is 90 wt% or less of the total amount of the components (C1) and (C2), the resulting cured product has a sufficiently high elongation.

A polymerizable monofunctional compound or a polymerizable polyfunctional compound may be further added to the curable liquid resin composition of the present invention. As examples of monofunctional compounds, vinyl group-containing lactams such as N-vinylpyrrolidone and N-vinylcaprolactam, (meth)acrylates having an alicyclic structure such as isobornyl (meth)acrylate, bornyl (meth)acrylate, tricyclodecanyl (meth)acrylate, and dicyclopentanyl (meth)acrylate, benzyl (meth)acrylate, 4-butylcyclohexyl (meth)acrylate, acryloylmorpholine, vinylimidazole, vinylpyridine, and the like can be given. Further examples include 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxydiethylene glycol (meth)acrylate, benzyl (meth)acrylate, phenoxyethyl (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypolypropylene glycol (meth)acrylate, diacetone (meth)acrylamide, isobutoxymethyl (meth)acrylamide, N,N-dimethyl (meth)acrylamide, t-octyl (meth)acrylamide, dimethylaminoethyl (meth)acrylate, diethylaminoethyl (meth)acrylate, 7-amino-3,7-dimethyloctyl (meth)acrylate, N,N-diethyl (meth)acrylamide, N,N-dimethylaminopropyl (meth)acrylamide, hydroxybutyl vinyl ether, lauryl vinyl ether, cetyl vinyl ether, 2-ethylhexyl vinyl ether, and compounds shown by the following formulas (4) to (7): 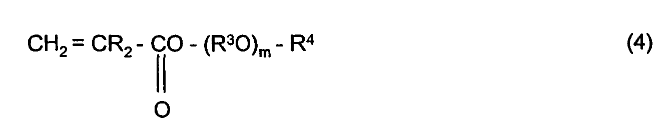 wherein R² represents a hydrogen atom or a methyl group, R³ represents an alkylene group having 2-6, and preferably 2-4 carbon atoms, R⁴ represents a hydrogen atom or an alkyl group having 1-12, and preferably 1-9 carbon atoms, and m is an integer of 0-12, and preferably 1-8; 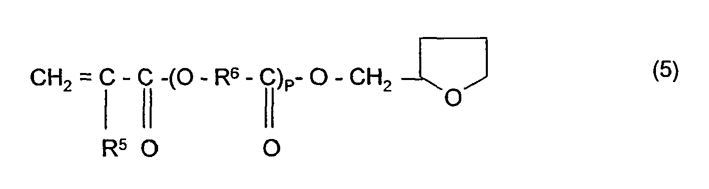 wherein R⁵ represents a hydrogen atom or a methyl group, R⁶ represents an alkylene group having 2-8 carbon atoms, and preferably 2-5 carbon atoms, and p represents an integer of 1-10, and preferably 1-4; 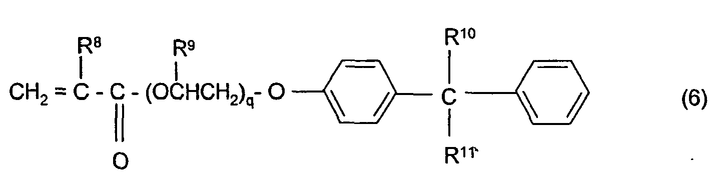 wherein R⁸, R⁹, R¹⁰, and R¹¹ individually represent H or CH₃, and q is an integer of 1-5.

Of these monofunctional compounds, N-vinylpyrrolidone, lactams containing a vinyl group such as N-vinylcaprolactam, isobornyl (meth)acrylate, and lauryl acrylate are preferable.

As commercially available products of these monofunctional compounds, IBXA (manufactured by Osaka Organic Chemical Industry Co., Ltd.), Aronix M-111, M-113, M-114, M-117, TO-1210 (manufactured by Toagosei Co., Ltd.) may be used.

As examples of polyfunctional compounds, trimethylolpropane tri(meth)acrylate, trimethylolpropanetrioxyethyl (meth)acrylate, pentaerythritol tri(meth)acrylate, ethylene glycol di(meth)acrylate, triethylene glycol diacrylate, tetraethylene glycol di(meth)acrylate, tricyclodecanediyldimethylene di(meth)acrylate, polyethylene glycol di(meth)acrylate, 1,4-butanediol di(meth)acrylate, 1,6-hexanediol di(meth)acrylate, neopentyl glycol di(meth)acrylate, tripropylene glycol di(meth)acrylate, neopentyl glycol di(meth)acrylate, (meth)acrylic acid terminated addition compound of bisphenol A diglycidyl ether, pentaerythritol tri(meth)acrylate, pentaerythritol tetra(meth)acrylate, polyester di(meth)acrylate, tris(2-hydroxyethyl) isocyanurate tri(meth)acrylate, tris(2-hydroxyethyl)isocyanurate di(meth)acrylate, tricyclodecanedimethanol di(meth)acrylate, di(meth)acrylate of ethylene oxide or propylene oxide addition diol of bisphenol A, di(meth)acrylate of ethylene oxide or propylene oxide addition diol of hydrogenated bisphenol A, epoxy(meth)acrylate prepared by the addition of (meth)acrylate to diglycidyl ether of bisphenol A, triethylene glycol divinyl ether, and the like can be given.

Of these polyfunctional compounds, tricyclodecanediyldimethyl (meth)acrylate, di(meth)acrylate of ethylene oxide addition diol of bisphenol A, and tris(2-hydroxyethyl)isocyanurate tri(meth)acrylate are preferable.

As commercially available products of these polyfunctional compounds, Yupimer UV, SA1002 (manufactured by Mitsubishi Chemical Corp.), Aronix M-215, M-315, M-325, TO-1210 (manufactured by Toagosei Co., Ltd.), and the like can be given.

These polymerizable compounds are added in an amount of preferably 5-90 wt%, and particularly preferably 10-80 wt% of the curable liquid resin composition of the present invention. If the amount is 5-90 wt%, the application shape is rarely changed, whereby applicability is stabilized.

The curable liquid resin composition of the present invention may include a polymerization initiator. As the polymerization initiator, a heat polymerization initiator or a photoinitiator may be used. These initiators may be used in combination.

When curing the curable liquid resin composition of the present invention by applying heat, a heat polymerization initiator such as peroxides or azo compounds is used. As specific examples of the heat polymerization initiator, benzoyl peroxide, t-butyloxybenzoate, azobisisobutyronitrile, and the like can be given.

When curing the curable liquid resin composition of the present invention by applying radiation, a photoinitiator is used. If necessary, a photosensitizer may be added. As examples of photoinitiators, 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl methyl ketal, 1-(4-isopropylphenyl)-2-hydroxy-2- methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyl diphenylphosphine oxide, bis-(2,6-dimethoxybenzoyl)-2,4,4-trimethylpentylphosphine oxide; Irgacure 184, 369, 651, 500, 907, CGI1700, CGI1750, CGI1850, CG24-61 (manufactured by Ciba Specialty Chemicals Co., Ltd.); Lucirin LR8728 (manufactured by BASF); Darocure 1116, 1173 (manufactured by Merck), Ubecryl P36 (manufactured by UCB), and the like can be given. As examples of photosensitizers, triethylamine, diethylamine, N-methyldiethanoleamine, ethanolamine, 4-dimethylaminobenzoic acid, methyl 4-dimethylaminobenzoate, ethyl 4-dimethylaminobenzoate, isoamyl 4-dimethylaminobenzoate; Ubecryl P102, 103, 104, 105 (manufactured by UCB); and the like can be given.

When curing the curable liquid resin composition of the present invention by applying both heat and radiation, the heat polymerization initiator and the photoinitiator may be used in combination. The polymerization initiator is added to the composition in an amount of 0.1-10 wt%, and preferably 0.5-7 wt%.

Various additives such as antioxidants, coloring agents, UV absorbers, light stabilizers, silane coupling agents, heat polymerization inhibitors, leveling agents, surfactants, preservatives, plasticizers, lubricants, solvents, fillers, aging preventives, wettability improvers, and coating surface improvers may be optionally added to the curable liquid resin composition of the present invention insofar as the characteristics of the curable liquid resin composition are not adversely affected.

The curable liquid resin composition of the present invention is cured using heat and/or radiation. Radiation used herein refers to infrared rays, visible rays, ultraviolet rays, X-rays, electron beams, α-rays, β-rays, γ-rays, and the like.

The invention also relates to a coated optical fiber having a primary coating and a secondary coating and optionally an ink coating, wherein at least one of the coatings is a cured resin obtainable by curing a composition according to the invention. Furthermore the invention relates to a ribbon comprising coated and optionally inked optical fibers, bonded or covered by a matrix material wherein the matrix material is a cured resin obtainable by curing a composition according to the invention. The invention also relates to the use of a cured resin obtainable by curing a curable liquid resin composition according to the invention as a primary coating or secondary coating of an optical fiber or as a matrix material.

The present invention is described below in more detail by examples.

However, the present invention is not limited to these examples.

### Examples

### Example 1

A reaction vessel equipped with a stirrer was charged with 15.23 g of 2,4-tolylene diisocyanate, 0.014 g of 2,6-di-t-butyl-p-cresol, 0.047 g of dibutyltin dilaurate, and 0.005 g of phenothiazine. The mixture was cooled with ice to 10°C or less while stirring. After the addition of 13.134 g of hydroxyethyl acrylate dropwise while controlling the temperature of the mixture at 20°C or less, the mixture was allowed to react for one hour while stirring. After the addition of 22.506 g of polypropylene glycol with a number average molecular weight of 2000 and 7.859 g of alkylene oxide addition diol of bisphenol A with a number average molecular weight 400 ("Uniol DA400" manufactured by Nippon Oil and Fats Co., Ltd.), the mixture was stirred at 70-75°C for three hours. The reaction was terminated when the residual isocyanate content was reduced to 0.1 wt% or less. The mixture was then cooled to 50-60°C. After the addition of 18.954 g of isobornyl acrylate, 10.340 g of Yupimer UVS A1002 (manufactured by Mitsubishi Chemical Corp.), 8.925 g of N-vinylcaprolactam, 3.00 g of Irgacure 184 (manufactured by Ciba Specialty Chemicals Co., Ltd.), and 0.3 g of Sumilizer GA-80 (manufactured by Sumitomo Chemical Industries Co., Ltd.), the mixture was stirred until a homogeneous liquid resin was obtained to obtain a curable liquid resin composition of the present invention.

### Example 2

A reaction vessel equipped with a stirrer was charged with 17 .867 g of isophorone diisocyanate, 0.014 g of 2,6-di-t-butyl-p-cresol, 0.047 g of dibutyltin dilaurate, and 0.005 g of phenothiazine. The mixture was cooled with ice to 10°C or less while stirring. After the addition of 11.964 g of hydroxyethyl acrylate dropwise while controlling the temperature of the mixture at 20°C or less, the mixture was allowed to react for one hour while stirring. After the addition of 21.698 g of polypropylene glycol with a number average molecular weight of 2000 and 7.158 g of alkylene oxide addition diol of bisphenol A with a number average molecular weight 400 ("Uniol DA400" manufactured by Nippon Oil and Fats Co., Ltd.), the mixture was stirred at 70-75°C for three hours. The reaction was terminated when the residual isocyanate content was reduced to 0.1 wt% or less. The mixture was then cooled to 50-60°C. After the addition of 18.954 g of isobornyl acrylate, 10.340 g of Yupimer UVS A1002 (manufactured by Mitsubishi Chemical Corp.), 8.925 g of N-vinylcaprolactam, 3.00 g of Irgacure 184 (manufactured by Ciba Specialty Chemicals Co., Ltd.), and 0.3 g of Sumilizer GA-80 (manufactured by Sumitomo Chemical Industries Co., Ltd.), the mixture was stirred until a homogeneous liquid resin was obtained to obtain a curable liquid resin composition of the present invention.

### Comparative Example 1

A reaction vessel equipped with a stirrer was charged with 15.23 g of 2,4-tolylene diisocyanate, 0.014 g of 2,6-di-t-butyl-p-cresol, 0.047 g of dibutyltin dilaurate, and 0.005 g of phenothiazine. The mixture was cooled with ice to 10°C or less while stirring. After the addition of 13.134 g of hydroxyethyl acrylate dropwise while controlling the temperature of the mixture at 20°C or less, the mixture was allowed to react for one hour while stirring. After the addition of 22.506 g of polytetramethylene glycol with a number average molecular weight of 2000 and 7.859 g of alkylene oxide addition diol of bisphenol A with a number average molecular weight 400 ("Uniol DA400" manufactured by Nippon Oil and Fats Co., Ltd.), the mixture was stirred at 70-75°C for three hours. The reaction was terminated when the residual isocyanate content was reduced to 0.1 wt% or less. The mixture was then cooled to 50-60°C. After the addition of 18 .954 g of isobornyl acrylate, 10.340 g of Yupimer UVS A1002 (manufactured by Mitsubishi Chemical Corp.), 8.925 g of N-vinylcaprolactam, 3.00 g of Irgacure 184 (manufactured by Ciba Specialty Chemicals Co., Ltd.), and 0.3 g of Sumilizer GA-80 (manufactured by Sumitomo Chemical Industries Co., Ltd.), the mixture was stirred until a homogeneous liquid resin was obtained to obtain a curable liquid resin composition.

### Comparative Example 2

A reaction vessel equipped with a stirrer was charged with 16.642 g of 2,4-tolylene diisocyanate, 0.014 g of 2,6-di-t-butyl-p-cresol, 0.047 g of dibutyltin dilaurate, and 0.005 g of phenothiazine. The mixture was cooled with ice to 10°C or less while stirring. After the addition of 19.579 g of hydroxyethyl acrylate dropwise while controlling the temperature of the mixture at 20°C or less, the mixture was allowed to react for one hour while stirring. After the addition of 22.507 g of polypropylene glycol with a number average molecular weight of 2000, the mixture was stirred at 70-75°C for three hours. The reaction was terminated when the residual isocyanate content was 0.1 wt% or less. The mixture was then cooled to 50-60°C. After the addition of 18 .954 g of isobornyl acrylate, 10.340 g of Yupimer UVS A1002 (manufactured by Mitsubishi Chemical Corp.), 8.952 g of N-vinylcaprolactam, 3.00 g of Irgacure 184 (manufactured by Ciba Specialty Chemicals Co., Ltd.), and 0.3 g of Sumilizer GA-80 (manufactured by Sumitomo Chemical Industries Co., Ltd.), the mixture was stirred until a homogeneous liquid resin was obtained to obtain a curable liquid resin composition.

### Test Example

### Preparation of test film:

The curable liquid resin composition was applied to a glass plate by using an applicator bar for a thickness of 250 □m. The curable liquid resin composition was cured by applying ultraviolet rays at a dose of 1 J/cm² in air to obtain a test film.

### 1. Coagulation:

After allowing the liquid resin to stand at 5°C for 30 days, whether or not the liquid resin coagulated was observed with the naked eye. A case where coagulation was not substantially observed was indicated by "None", and a case where coagulation was observed was indicated by "Observed".

### 2. Applicability as ribbon matrix material

### 2-1. Young's modulus at room temperature:

The above film was cut into a sample in the shape of a strip with a width of 6 mm and a length of 25 mm. The sample was subjected to a tensile test at a temperature of 23°C and a humidity of 50%. The Young's modulus was calculated from the tensile strength at a tensile rate of 1 mm/min. and a strain of 2.5%.

### 2-2. Young's modulus at high temperature:

The above film was cut into a sample in the shape of a strip with a width of 6 mm and a length of 25 mm. The sample was subjected to a tensile test at a temperature of 60°C and a humidity of 50%. The Young's modulus was calculated from the tensile strength at a tensile rate of 1 mm/min. and a strain of 2.5%.

### 1. Elongation:

The above film was cut into a sample in the shape of a strip with a width of 6 mm and a length of 25 mm. The sample was subjected to a tensile test at a temperature of 23°C and a humidity of 50%. The tensile rate was 50 mm/min. Elongation was evaluated by calculating the breaking elongation from the travel distance of a chuck which is a sample holding section of a tensile tester at the time of breaking.

### Evaluation of durability

### 3-1. Accelerated test:

The above film was immersed in hot water at 80°C for 60 days, removed, and dried at 23°C under vacuum.

### 3-2. Measurement of Young's modulus:

The Young's modulus of the film after the accelerated test described in 3-1 was measured by using the same method as described in 2-1.

### 3-3. Measurement of elongation:

The breaking elongation of the film after the accelerated test described in 3-1 was measured by using the same method as described in 2-3.

### Judgment:

The judgment standard for each item is as follows.
Coagulation: None
Applicability as ribbon matrix material
Young's modulus at room temperature: 600-1400 MPa
Young's modulus at high temperature: 250 MPa or more
Elongation: 40% or more
Durability
Young's modulus at room temperature after accelerated test: 700-1300 MPa Elongation after accelerated test: 40% or more
A film which satisfied all the items was judged as "Good".

**[Table 1]**

| Coat material | Example 1 | Example 2 | Comparative Example 1 | Comparative Example 2 |
|---|---|---|---|---|
| Coagulation | None | None | Observed | None |
| Applicability as ribbon matrix material | | | | |
| Young's modulus at room temperature (MPa) | 800 | 950 | 800 | 800 |
| Young's modulus at high temperature (MPa) | 300 | 320 | 300 | 150 |
| Elongation (%) | 52 | 56 | 60 | 45 |
| Durability | | | | |
| Young's modulus at room temperature (MPa) | 880 | 1070 | 880 | 950 |
| Elongation (%) | 48 | 50 | 55 | 40 |
| Judgment | Good | Good | Bad | Bad |

As shown in Table 1, the resin compositions of the present invention in the Examples did not coagulate at a low temperature, and the cured products of these compositions have applicability as a secondary material, in particular, as a ribbon matrix material and exhibit good elongation after the durability test.

### Effect of the Invention

According to the present invention, a curable liquid resin composition which produces a cured product having high elasticity and high elongation suitable as a secondary material, in particular, as a ribbon matrix material can be provided.

## Claims

1. A curable liquid resin composition comprising
- a urethane (meth)acrylate obtained by using as polyol components: (i) a polyether polyol comprising a structure according to formula (1), (ii) a polyether polyol having a cyclic structure and optionally (iii) one or more other polyols
-CH₂CH(CH₃)O- (1)
- 1-95 wt.% of a urethane (meth)acrylate obtained by reacting 1 mol of diisocyanate with 2 mol of hydroxyl group-containing (meth)acrylate.

2. The curable liquid resin composition according to claim 1, wherein the polyether polyol comprising a structure according formula (1) is polypropylene glycol.

3. The curable liquid resin composition according to claim 1 or 2, wherein the polyether polyol having a cyclic structure is an aromatic cyclic polyether polyol.

4. The curable liquid resin composition according to claim 3, wherein the aromatic cyclic polyether polyol is an alkoxylated bisphenol A.

5. The curable liquid resin composition according to any one of claims 1 to 4, wherein the curable liquid resin composition does not substantially coagulate when allowed to stand at 5 °C for 30 days.

6. The curable liquid resin composition according to any one of claims 1 to 5, having a Young's modulus at 25 °C of 600-1,400 MPa and an elongation at break of 40 % or more immediately after curing.

7. The curable liquid resin composition according to any one of claims 1 to 6, the composition having a Young's modulus of 600-1,400 MPa and an elongation break of 40 % or more after immersion in hot water at 80 °C for 60 days.

8. A coated optical fiber having a primary coating and a secondary coating and optionally an ink coating, wherein at least one of the coatings is a cured resin obtainable by curing a composition according to any one of claims 1-7.

9. A ribbon comprising coated and optionally inked optical fibers, bonded or covered by a matrix material wherein the matrix material is a cured resin obtainable by curing a composition according to any one of claims 1-7.

10. Use of a cured resin obtainable by curing a curable liquid resin composition according to any of claims 1-7 as a primary coating or secondary coating of an optical fiber or as a matrix material.

## Patentansprüche

1. Härtbare flüssige Harzzusammensetzung, umfassend:
- ein Urethan(meth)acrylat, das erhalten wird, indem man folgende Polyolkomponenten verwendet: (i) ein Polyetherpolyol, das eine Struktur gemäß Formel (1) umfasst, (ii) ein Polyetherpolyol, das eine zyklische Struktur aufweist, und gegebenenfalls (iii) ein oder mehrere andere Polyole;
-CH₂CH(CH₃)O- (1)
- 1-95 Gew.-% eines Urethan(meth)acrylats, das erhalten wird, indem man 1 mol Diisocyanat mit 2 mol eines Hydroxygruppen enthaltenden (Meth)acrylats umsetzt.

2. Härtbare flüssige Harzzusammensetzung gemäß Anspruch 1, wobei es sich bei dem Polyetherpolyol, das eine Struktur gemäß Formel (1) umfasst, um Polypropylenglycol handelt.

3. Härtbare flüssige Harzzusammensetzung gemäß Anspruch 1 oder 2, wobei das Polyetherpolyol, das eine zyklische Struktur aufweist, ein aromatisches zyklisches Polyetherpolyol ist.

4. Härtbare flüssige Harzzusammensetzung gemäß Anspruch 3, wobei das aromatische zyklische Polyetherpolyol ein alkoxyliertes Bisphenol A ist.

5. Härtbare flüssige Harzzusammensetzung gemäß einem der Ansprüche 1 bis 4, wobei die härtbare flüssige Harzzusammensetzung nicht wesentlich koaguliert, wenn man sie 30 Tage lang bei 5 °C stehen lässt.

6. Härtbare flüssige Harzzusammensetzung gemäß einem der Ansprüche 1 bis 5, die unmittelbar nach der Härtung einen Young-Modul bei 25 °C von 600 bis 1400 MPa und eine Reißdehnung von 40% oder mehr aufweist.

7. Härtbare flüssige Harzzusammensetzung gemäß einem der Ansprüche 1 bis 6, wobei die Zusammensetzung nach 60 Tagen Eintauchen in heißes Wasser von 80 °C einen Young-Modul von 600 bis 1400 MPa und eine Reißdehnung von 40% oder mehr aufweist.

8. Beschichtete optische Faser, die eine primäre Beschichtung und eine sekundäre Beschichtung und gegebenenfalls eine Tintenbeschichtung aufweist, wobei wenigstens eine der Beschichtungen ein gehärtetes Harz ist, das durch Härten einer Zusammensetzung gemäß einem der Ansprüche 1 bis 7 erhältlich ist.

9. Band, das beschichtete und gegebenenfalls eingefärbte optische Fasern umfasst, die mit einem Matrixmaterial verklebt oder bedeckt sind, wobei das Matrixmaterial ein gehärtetes Harz ist, das durch Härten einer Zusammensetzung gemäß einem der Ansprüche 1 bis 7 erhältlich ist.

10. Verwendung eines gehärteten Harzes, das durch Härten einer härtbaren flüssigen Harzzusammensetzung gemäß einem der Ansprüche 1 bis 7 erhältlich ist, als primäre Beschichtung oder sekundäre Beschichtung einer optischen Faser oder als Matrixmaterial.

## Revendications

1. Composition de résine liquide durcissable comprenant :
- un (méth)acrylate d'uréthane obtenu en utilisant comme composants polyols : (i) un polyétherpolyol comprenant une structure selon la formule (1), (ii) un polyétherpolyol ayant une structure cyclique et éventuellement (iii) un ou plusieurs autres polyols
-CH₂CH(CH₃)O- (1)
- 1-95 % en poids d'un (méth)acrylate d'uréthane obtenu par réaction de 1 mol de diisocyanate avec 2 mol de (méth)acrylate contenant un ou des groupes hydroxyle.

2. Composition de résine liquide durcissable selon la revendication 1 où le polyétherpolyol comprenant une structure selon la formule (1) est le polypropylèneglycol.

3. Composition de résine liquide durcissable selon la revendication 1 ou 2 où le polyétherpolyol ayant une structure cyclique est un polyétherpolyol cyclique aromatique.

4. Composition de résine liquide durcissable selon la revendication 3 où le polyétherpolyol cyclique aromatique est un bisphénol A alcoxylé.

5. Composition de résine liquide durcissable selon l'une quelconque des revendications 1 à 4 où la composition de résine liquide durcissable ne coagule sensiblement pas quand elle est laissée au repos à 5°C pendant 30 jours.

6. Composition de résine liquide durcissable selon l'une quelconque des revendications 1 à 5 ayant un module d'Young à 25°C de 600-1 400 MPa et un allongement à la rupture de 40 % ou plus immédiatement après le durcissement.

7. Composition de résine liquide durcissable selon l'une quelconque des revendications 1 à 6, la composition ayant un module d'Young de 600-1 400 MPa et un allongement à la rupture de 40 % ou plus après immersion dans l'eau chaude à 80°C pendant 60 jours.

8. Fibre optique revêtue ayant un revêtement primaire et un revêtement secondaire et éventuellement un revêtement d'encre, où au moins l'un des revêtements est une résine durcie pouvant être obtenue par durcissement d'une composition selon l'une quelconque des revendications 1-7.

9. Ruban comprenant des fibres optiques revêtues et éventuellement encrées, liées ou recouvertes par une matière de matrice où la matière de matrice est une résine durcie pouvant être obtenue par durcissement d'une composition selon l'une quelconque des revendications 1-7.

10. Utilisation d'une résine durcie pouvant être obtenue par durcissement d'une composition de résine liquide durcissable selon l'une quelconque des revendications 1-7 comme revêtement primaire ou revêtement secondaire d'une fibre optique ou comme matière de matrice.
